# EUROPEAN PATENT APPLICATION

(11) **EP 3 520 879 A1**
(43) Date of publication of application: **07.08.2019**
(21) Application number: 19154976.5
(22) Date of filing: 01.02.2019
(51) Int. Cl.: B01D 53/00, B01D 46/00, B01D 46/02, B01D 46/24

(54) **METHOD AND SYSTEM FOR THE PURIFICATION OF FUMES**

(30) Priority: 05.02.2018 IT 201800002410
(71) Applicant: SO.TEC S.r.l., 24030 Almenno S. Bartolomeo (Bergamo) (IT)
(72) Inventor: TAGLIABUE, Gianantonio, 24030 ALMENNO S. BARTOLOMEO (BERGAMO) (IT)
(74) Representative: Zermani, Umberto

(57) **Abstract**

Method for the purification of fumes containing isoparaffinic hydrocarbons, including the steps of cooling the fumes through the passage thereof in a heat exchanger (2) so as to obtain cooled fumes and filtering the cooled fumes by means of a coalescence filtering machine (3) in order to separate the cooled fumes into a liquid fraction of filtered products and a gaseous fraction of purified fumes. The method further comprises the steps of recovering the filtered products in a cooled collection tank (7) and dispersing the purified fumes into the air.

## Description

The present invention relates to a method for the purification of fumes.

In particular, the present invention relates to a method for the purification of fumes containing isoparaffinic hydrocarbons and coming from working processes/plants.

Furthermore, the present invention relates to a system for the purification of fumes coming from a processing wherein isoparaffinic hydrocarbons are used, *e.g.* as solvents.

An example of such processes are sintering processes, in particular sintering processes of polytetrafluoroethylene.

Polytetrafluoroethylene (hereinafter PTFE) sintering plants refer to all those plants wherein the PTFE is treated with solvent substances such as the above-mentioned isoparaffinic hydrocarbons and are used in the production of different products such as, *e.g*., tubes or tapes in TEFLON™. Other uses of isoparaffinic hydrocarbons are, for example, the exploitation as a fluid for metalworking, such as rolling oil, or in the production and processing of rubber.

The isoparaffinic hydrocarbons are high-boiling substances with a boiling temperature ranging from 150 to 220°C.

The fumes coming out from the above sintering plants are fumes rich in volatile organic compounds (VOCs) which must necessarily be reduced/abated in order to reduce the polluting impact on the environment.

Nowadays, the use of scrubbers to abate the concentration of such substances present in the fumes is well known, but the results are not always satisfactory and often they do not ensure the legal limits required for the emissions into the atmosphere. Other technologies such as combustion or adsorption with activated charcoal are also feasible, but generally they are not used due to high management costs.

The technical task of the present invention is therefore to provide a method and a system for the purification of fumes that are able to overcome the drawbacks arisen from the known art mentioned above.

An object of the present invention is therefore to provide a method and a system for the purification of fumes that allow to abate in greater quantity and more effectively the harmful substances present in the exhaust fumes of a sintering process.

A further object of the present invention is therefore to provide a method and a system for the purification of fumes that are able to manage the high temperatures of the fumes.

Furthermore, an object of the present invention is to provide a method and a system for the extraction of a combustible substance from the fumes coming from a working process using isoparaffinic hydrocarbons.

The mentioned technical task and the specified aims are substantially achieved by a method and a system for the purification of fumes, comprising the technical specifications set out in one or more of the appended claims.

In particular, said objects are achieved by a method for the purification of fumes containing isoparaffinic hydrocarbons including the steps of introducing the fumes, which have a temperature higher than 60°C (generally ranging from 60 to 80°C), into a purification system, cooling the fumes through the passage thereof through a heat exchanger in order to obtain cooled fumes and condensation products. According to one aspect of the present invention, the cooling step allows to obtain fumes at a temperature lower than 15°C, preferably lower than 10°C.

In addition, the purification method involves introducing the cooled fumes in a coalescence filtering machine comprising a plurality of pocket filters and a plurality of candle filters operatively arranged in series, filtering the cooled fumes through the coalescence filtering machine in order to separate the cooled fumes into a liquid fraction of filtered products and a gaseous fraction of purified fumes. The filtering step includes a first filtering step of the cooled fumes through the plurality of pocket filters and a second filtering step of the cooled fumes through the plurality of candle filters carried out in succession.

Finally, according to one aspect of the present invention, the method comprises the steps of recovering the filtered products in a collection tank (preferably a cooled one) and dispersing the purified fumes into the air.

Advantageously, in this way, even in case of "machine downtime", the coalescence filtering machine turns out to be empty, thus allowing the operators to act safely within the machine itself.

As already briefly mentioned above, the collection tank is preferably cooled, *i.e.* associated with a heat exchanger configured to keep the temperature of the liquids inside it below a predetermined temperature (preferably lower than 15°C).

Advantageously, in this way, regardless of the operability of the coalescence filtering machine and the season, the liquids collected are kept at temperatures low enough to avoid the formation of a mixture in the air with a percentage of hydrocarbons above the lower flammability limit, which maximizes the safety of the plant.

According to a further aspect of the present invention, the method includes the sub-steps of safely transporting the filtered and/or condensation products from the (cooled) collection tank to a storage station and the phase of safely storing the filtered and/or condensation products in said storage station.

Note that stored products include a first fraction, containing water, and a second fraction, containing hydrocarbons that are immiscible with one another or have a reduced miscibility.

In this respect, preferably the method provides for a step of separating the stored products (*e.g*. by decantation) in order to separate the first fraction from the second one.

More preferably, a step of recovering the second fraction in order to obtain a combustible liquid and a step of discarding the first fraction are also provided.

Advantageously, in this way it is possible to optimize the purification of fumes and, at the same time, produce combustible substances which can be reused within the company or, alternatively, marketed through parallel channels.

In addition, the above objects are achieved by a purification system comprising a suction duct for fumes coming from a working process using isoparaffinic hydrocarbons, a cooling system provided with at least one refrigerating unit and a heat exchanger located along the suction duct to cool the fumes to a temperature lower than 15°C.

The purification system also includes a coalescence filtering machine, arranged in fluid connection with the suction duct and operatively arranged downstream of the heat exchanger, and a delivery duct of the fumes suitable to transport the fumes from an outlet of the coalescence filtering machine to a portion of an outlet portion of the purification system (chimney).

The machine includes a first filtering stage provided with a plurality of pocket filters and at least a second filtering stage provided with a plurality of candle filters operatively arranged in series.

Further characteristics and the related advantages of the present invention will become more apparent from the description of an exemplary, but not exclusive, and therefore non-limiting preferred embodiment of a method and a system for the purification of fumes.

Such description will be set forth hereinafter with reference to the accompanying drawing given only for illustrative and, therefore, non-limiting purpose, wherein:

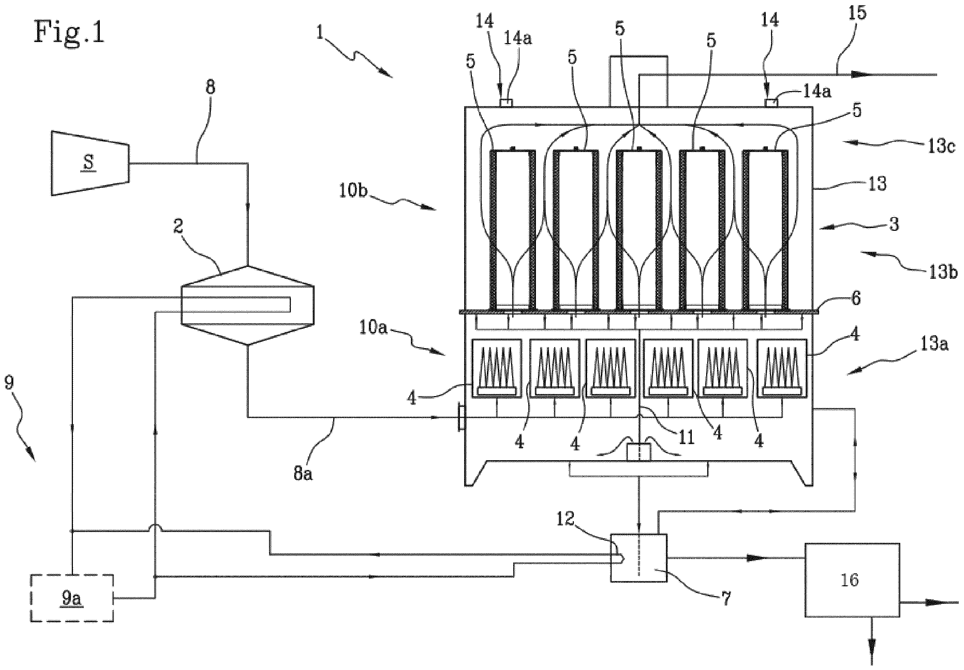

- Figure 1 is a schematic perspective representation of a purification system which forms the object of the present invention.

With reference to the attached figure, the number 1 identifies a purification system of fumes containing isoparaffinic hydrocarbons according to the present invention.

Fumes containing isoparaffinic hydrocarbons refer to fumes coming out from a working process "S" using such hydrocarbons, *e.g.* as a solvent.

The isoparaffinic hydrocarbons are substances used, for example, as a fluid for the metalworking, such as rolling oil, and, furthermore, they are used for the production and processing of rubber. In other words, isoparaffinic hydrocarbons have various uses in different working processes "S".

Trade examples of such hydrocarbons are, for example, substances known as ISOPAR® (hydrocarbons, C11-C12, isoalkanes, aromatic compound <2%), or the like.

As already mentioned above, without limiting in any way the application of the method according to the present invention, an example of such processes are the sintering processes of polytetrafluoroethylene.

A peculiarity of the isoparaffinic hydrocarbons is that they are flammable liquids at temperatures above 40°C.

The purification method which forms the object of the present invention includes a first step of introducing the fumes (containing isoparaffinic hydrocarbons) into the purification system 1 shown in Figure 1. The fumes thus introduced into the purification system 1 have a temperature higher than 60°C. For example, it is possible that the fumes coming out from the working process "S" have a temperature of about 80°C.

This is followed by a step of cooling the fumes carried out by passing the fumes themselves through a heat exchanger 2, in order to obtain cooled fumes. The cooling step involves cooling the fumes to a temperature lower than 15°C.

Preferably, the step of cooling the fumes through the heat exchanger 2 is suitable to obtain cooled fumes with a temperature lower than 10°C. Even more preferably, such cooling step involves obtaining fumes cooled to a temperature of about 8°C.

The step of cooling the fumes allows to obtain the formation of micro-mists of isoparaffinic hydrocarbons that can be separated in a subsequent separation/filtration step (by coalescence).

Therefore, the step of cooling the fumes allows to obtain, in addition to the cooled fumes, condensation products containing a quantity of isoparaffinic hydrocarbons.

At this point the method involves introducing the cooled fumes into a coalescence filtering machine 3 comprising multiple pocket filters 4 and a plurality of candle filters 5 operatively arranged in series (better described hereinafter).

In the coalescence filtering machine 3, the filtering step of the cooled fumes takes place in order to separate the micro-mists into a liquid fraction of filtered products and a gaseous fraction of purified gases.

In particular, the filtering step includes a first filtering step and a second filtering step carried out in succession with respect to each other. Specifically, the first filtering step involves filtering the fumes through the plurality of filters provided with pocket or pockets 4.

The filters provided with pocket or pockets 4 are static filters wherein a plurality of filtering elements is arranged in bellows, preferably with a vertical orientation of the apices and grooves in order to allow the disposal of filtered products by falling.

The second filtering step involves filtering the fumes (already partially filtered by the plurality of pockets 4) through the plurality of candle filters 5. The candle filters 5 include a cylindrical support frame suitable to support a filtering layer, generally made of glass fibre.

After the filtering step, the purified fumes are dispersed into the air.

The applicant points out that, advantageously, the method described above allows an abatement in the concentration of VOCs from about 900 mg/m^3 entering the purification system 1 to a concentration of about 3-4 mg/m^3 when released into the atmosphere.

Simultaneously with the filtering step, the filtered products are recovered and continuously discharged into a collection tank 7, preferably arranged outside the coalescence filtering machine 3.

More precisely, the filtered products are directed, by falling, towards the bottom of the coalescence filtering machine which, e.g. by means of a hydraulic guard 11, ensures that they are continuously discharged into the collection tank 7.

Such step of continuous discharge of the filtered products avoids the formation of explosive isoparaffinic vapours inside the coalescence filtering machine 3, which can cause the formation of explosive mixtures when the temperature exceeds 40°C.

Moreover, note that the collection tank 7 is closed and isolated from the external environment, so that the filtered products are isolated from the environment so as not to come into contact with the air.

Advantageously, in this way the lower part of filter 3 turns to be always free from the presence of liquids in order to reduce the presence of vapours of isoparaffinic products. Note that this collection step involves collecting the filtered products from both filtering steps.

Preferably, note that the collection tank 7 is cooled. Therefore, the collection step involves storing the filtered products in an environment separate from the coalescence filtering machine and kept at a predetermined temperature (preferably lower than 15°).

The collection tank 7 is thus associated with an additional heat exchanger 12 configured to maintain the temperature of the liquids inside it below of a predetermined threshold value (preferably lower than 15°).

Advantageously, in this way, regardless of whether or not the coalescence filtering machine 3 is in operation and of the season, the filtered products are kept at temperatures low enough to avoid the formation of explosive mixtures.

Finally, preferably, there is a step of transporting and storing the filtered and/or condensation products from the collection tank 7 to a recovery station 16.

Note that the recovered products include a first fraction, containing water, and a second fraction, containing hydrocarbons. The first and second fractions are immiscible with one another or have a reduced miscibility.

In this regard, in a preferred embodiment, the recovery step provides for a sub-step of separating the recovered products (preferably carried out by decantation) in order to obtain a separation between the first and the second fraction. Then, a step of storing the second fraction in order to obtain a combustible liquid (containing the isoparaffinic hydrocarbons) and a step of discarding the first fraction are carried out.

Advantageously, therefore, the method described above not only allows to maximize the abatement of VOCs in the fumes coming out from the plant, but also, in optimized embodiments, it allows a recycling of filtered products and condensation which can be reused as combustibles or for other purposes.

Furthermore, the purification system 1 for the implementation of the method described hitherto forms the object of the present invention. In particular, reference is made to a purification system of a working process "S", such as the sintering of polytetrafluoroethylene.

In accordance with the above description, the purification system 1 includes a suction duct 8 of the fumes, a cooling system 9 and a coalescence filtering machine 3.

The suction duct 8 allows to suck the fumes coming from the working process "S" to introduce them inside the purification system 1 itself. The temperature of the sucked fumes is higher than 60°C (generally between 60°C and 80°C).

The cooling system 9 is provided with a refrigerating unit 9a and a heat exchanger 2 arranged along the suction duct 8.

The cooling system 9 allows to cool the fumes passing through the heat exchanger 2 to a temperature lower than 15°C. Preferably, the cooling system 9 allows to bring the fumes to a temperature lower than 10°C. Even more preferably, cooling system 9 allows the abatement of the fume temperature to about 8 °C.

Preferably, the purification system 1 consists of two refrigerating units 9a arranged in parallel so that, in the event of a break of one of the two, the other one can be used during maintenance of the first one so as to ensure the cooling of the fumes.

Preferably, the purification system 1 comprises a recovery duct 8a extending from the heat exchanger 2 and configured to transport condensation products from the heat exchanger 2 to the collection tank 7.

Preferably, the recovery duct 8a coincides with the suction duct 8 in the portion connecting the heat exchanger 2 to the coalescence filtering machine 3.

The coalescence filtering machine 3 is in fluid connection with the suction duct 8 and is arranged downstream of the cooling system 9. More specifically, the coalescence filtering machine 3 is arranged downstream of the heat exchanger 2.

The coalescence filtering machine 3 includes a first filtering stage 10a and a second filtering stage 10b operatively arranged in series.

The first filtering stage 10a includes the plurality of previously described pocket filters 4.

The second filtering stage 10b, on the other hand, includes the plurality of candle filters 5 described above.

In the illustrated embodiment, the candle filters 5 are of the "stand by" type, *i.e.* with their lower end open and resting on a support 6 and the upper end closed, so that during the filtering step the flows pass through the candle filters 5 themselves from the inside towards the outside.

Alternatively, however, there is nothing to prevent the use of candle filters 5 of the "hanging" type, *i.e.* with the upper end open (and bound) and the lower end closed, so that during the filtering step the flows pass through the candle filters 5 themselves from the outside towards the inside.

The coalescence filtering machine 3 is also associated with the collection tank 7 to collect the filtered products from the first filtering stage 10a and from the second filtering stage 10b and a drainage system/hydraulic guard 11 of the second filtering stage 10b. The drainage system 11 is suitable to mediate the percolation of the filtered products away from the second filtering stage 10b towards the collection tank 7. In other words, the drainage system 11 allows the passage of the filtered products from the candle filters 5 to the collection tank 7, after passing through a hydraulic guard located on the bottom of the machine 3.

Preferably, according to what has been already previously described, it should be noted that the collection tank 7 is cooled.

In this respect, the cooling system 9 is preferably provided with an additional heat exchanger 12 associated with the collection tank 7, to cool it. Therefore, the cooling system 9 allows to cool the fumes passing through the additional heat exchanger 12 to a temperature lower than 15°C.

Preferably, the coalescence filtering machine includes a containment casing 13 wherein both the first 10a and the second filtering stage 10b are housed.

More precisely, the casing is mainly vertical and houses the first filtering stage 10a (pockets 4) in its own lower portion 13a and the second filtering stage 10b (candle filters 5) immediately above it.

In detail, in the containment casing 13, in addition to the lower portion 13a, an intermediate portion 13b and an upper portion 13c can be identified.

The lower portion 13a includes, in addition to the first filtering stage 10a (and, therefore, the pocket filters 4) the hydraulic guard for the discharge of the drainage system 11.

The intermediate portion 13b comprises the second filtering stage 10b (and thus the candle filters 5) as well as the drainage system 11 of the candle filters 5.

The upper portion 13c includes the vent ducts 14 provided with bursting disks 14a suitable to protect the coalescence machine 3 from the occurrence of internal overpressure caused by any explosion. In other words, the vent ducts 14 provided with the bursting disks 14a minimize the damage caused by any explosions inside the coalescence filtering machine 3.

The upper portion 13c is also associated with a suction fan (or fan, not shown in the attached figure) that allows the suction duct 8 to suck the fumes and let them pass through the coalescence filtering machine 3 from the lower portion 13a to the upper portion 13c itself.

Preferably, the purification system 1 also includes a recovery station 16 of the filtered products and the condensation products. According to what has been already previously described, in the recovery station 16, the recovered products include a first fraction, containing water, and a second fraction, containing hydrocarbons.

Preferably, the recovery station 16 includes separation means for the recovery of isoparaffinic hydrocarbons with consequent discharge of the water. In other words, in such embodiment, in the recovery station 16 the separation and subsequent recovery of the second fraction occur, in order to obtain a combustible liquid.

Furthermore, the purification system 1 comprises a delivery duct 15 of the fumes suitable to transport the fumes from an outlet of the coalescence filtering machine 3 to an output portion (not shown in the attached figures) of the purification system 1 itself. Such outlet of the purification system can be a chimney as well as a scrubber to further reduce the concentration of isoparaffinic hydrocarbons.

Preferably, the purification system 1 can be provided with a by-pass pipe with respective opening valve, which allows to directly exit the fumes through the chimney or the scrubber in case of damage and necessary maintenance of the purification system 1 itself (in particular in case of breakage of the coalescence filtering machine 3).

The purification system 1 described above allows to effectively abate the content of isoparaffinic hydrocarbons contained in the fumes of a working process "S".

The method described above and the purification system 1 described above are able to overcome the drawback arisen from the known art.

Advantageously, the present invention allows the abatement of a greater quantity of harmful substances contained in the exhaust fumes of a working process "S" compared to known methods or purification systems.

Even more advantageously, the present invention allows to manage the high temperatures of the fumes by means of the heat exchanger 2 placed between the coalescence filtering machine 3 and the outlet of the working process "S", as well as in the storage station in order to prevent unwanted explosions and therefore damages to the purification plant 1 itself or to the surrounding environment.

Advantageously, the present invention allows to extract a combustible substance from the fumes coming from a working process using isoparaffinic hydrocarbons.

## Claims

1. Method for the purification of fumes containing isoparaffinic hydrocarbons, comprising the steps of:
- injecting said fumes containing isoparaffinic hydrocarbons into a purification system (1), said fumes having a temperature higher than 60° C;
- cooling said fumes through the passage thereof in a heat exchanger (2) so as to obtain cooled fumes, having a temperature lower than 15° C, and condensation products;
- introducing said cooled fumes into a coalescence filtering machine (3) comprising multiple pocket filters (4) and a plurality of candle filters (5) operatively arranged in series;
- filtering said cooled fumes through said coalescence filtering machine (3) in order to separate said cooled fumes in a liquid fraction of filtered products and a gaseous fraction of purified fumes, said filtering step comprising a first step of filtering the cooled fumes by means of said multiple pocket filters (4) and a second step of filtering the cooled fumes by means of said plurality of candle filters (5) carried out in succession;
- recovering the filtered products in a collection tank (7);
- dispersing said purified fumes into the air.

2. Method according to claim 1, wherein said step of cooling the fumes through said heat exchanger (2) is adapted to cool down said fumes to a temperature lower than 10° C, preferably at a temperature of approximately 8° C.

3. Method according to claim 1 or 2, **characterized in that** it also provides for a step of recovering the condensation products obtained from said step of cooling of the fumes and collecting said condensation products in said collection tank (7).

4. Method according to claim 1 or 2, wherein said step of recovering the filtered and/or condensation products comprises the sub-steps of:
- collecting the products filtered by said first and said second filtering step and/or by said cooling step in said collection tank (7);
- keeping the products filtered by said first and said second filtering step and/or by said cooling step at a temperature lower than a predetermined threshold value, preferably of approximately 15° C.

5. Method according to claim 4, wherein said collection tank (7) is closed and isolated from the external environment, with a vent connected to the filter (13) in a lower part (13a).

6. Method according to claim 4 or 5, comprising a step of recovering the filtration and/or condensation products from the collection tank (7) to a recovery station (16), wherein said stored products comprise a first fraction containing water and a second fraction containing hydrocarbons, wherein the first and second fractions are immiscible with one another or have a reduced miscibility; said method comprising the following steps:
- separating said first and said second fractions;
- recovering the second fraction in order to obtain a combustible liquid;
- discarding the first fraction.

7. Purification system (1) of fumes containing isoparaffinic hydrocarbons comprising:
- a suction duct (8) of the fumes coming from a working process (S) using isoparaffinic hydrocarbons,
- a cooling system (9) provided with at least one refrigerating unit (9a) and a heat exchanger (2) arranged along said suction duct (8) to cool said fumes to a temperature lower than 15° C;
- a coalescence filtering machine (3) placed in fluid connection with the suction duct (8) and operatively arranged downstream of said cooling system (9); said machine comprising a first filtering stage (10a) comprising multiple pocket filters (4) and at least a second filtering stage (10b) comprising a plurality of candle filters (5) operatively arranged in series;
- a delivery duct (15) of the fumes suitable to transport said fumes from an outlet of said coalescence filtering machine (3) to an output portion of the purification system (1).

8. Purification system (1) according to claim 7, comprising a collection tank (7) placed in fluid connection with the coalescence filtering machine (3) for collecting the products filtered by said first filtering step (10a) and by said second filtering step (10b).

9. Purification system (1) according to claim 8, comprising a recovery duct (8a) extending from said heat exchanger (2) and configured to transport condensation products from said heat exchanger (2) to said collection tank (7).

10. Purification system (1) according to one or more of the claims from 7 to 9, wherein the collecting tank (7) is associated with an additional heat exchanger (12) configured to maintain the temperature of the liquids inside it below of a predetermined threshold value, preferably lower than 15° C.

11. Purification system (1) according to one or more of the claims from 7 to 10, wherein said coalescence filtering machine (3) comprises a containment casing (13) containing said first filtering step (10a) and said second filtering step (10b) and provided with at least one vent duct (14) provided with one or more bursting disks (14a).
